**Europäisches Patentamt**

**European Patent Office**

**Office européen des brevets**

(19)

(11) Veröffentlichungsnummer : **0 430 891 A2**

(12) # EUROPÄISCHE PATENTANMELDUNG

(21) Anmeldenummer : **90810916.8**

(22) Anmeldetag : **30.11.90**

(51) Int. Cl.⁵ : **H04N 7/167**

(30) Priorität : **01.12.89 CH 4136/89**

(43) Veröffentlichungstag der Anmeldung :
**05.06.91 Patentblatt 91/23**

(84) Benannte Vertragsstaaten :
**DE ES FR IT**

(71) Anmelder : **REDIFFUSION AG**
**Zollstrasse 58**
**CH-8005 Zürich (CH)**

(72) Erfinder : **Christoph, Martin**
**Soodstrasse 22a**
**CH-8134 Adliswil (CH)**

(74) Vertreter : **Ryffel, Rolf**
**c/o Hepp Ryffel AG Bahnhofstrasse 58**
**CH-8001 Zürich (CH)**

(54) **Gerät zum Verbessern eines codierten Videosignals.**

(57)   Ein codiertes Videosignal (V) enthält Zeilenimpulse (1, 2, 3), denen je eine Weiss-Schulter (4, 5, 6) vorangeht. In dem Videosignal (V) können kurzzeitige Signaleinbrüche (10, 11) auftreten, insbesondere an Stellen, wo der Momentanwert des Videosignals (V) gross ist, also in den Zeilenimpulsspitzen und in den Weiss-Schultern (4-9). Das Gerät dient dazu, die Zeilenimpulsspitzen zu regenerieren, so dass deren Längen dann von einem Decodiergerät einwandfrei festgestellt werden können. Das Gerät besitzt einen Videoausgang, den eine Umschalteinrichtung normalerweise mit einem Videoeingang verbindet. Beim Auftreten jedes Zeilenimpulses (1, 2, 3) wird die Umschalteinrichtung betätigt, um den Videoausgang vom Videoeingang auf eine Leitung umzuschalten, welche dauernd Impulsbodenspannung (B) führt. Das Auftreten jedes Zeilenimpulses (1, 2, 3) wird bei einem Schwellenwert (S) festgestellt, der in der Mitte zwischen der Impulsbodenspannung (B) und der Spannung (W) der Weiss-Schultern (4-9) liegt, wo praktisch keine Signaleinbrüche zu befürchten sind.

## Fig. 1

# GERÄT ZUM VERBESSERN EINES CODIERTEN VIDEOSIGNALS

Videosignale, die auf Hochfrequenzträger aufmoduliert und von Fernsehsendern ausgestrahlt oder über Kabelnetze übertragen werden, werden üblicherweise codiert, wenn verhindert werden soll, dass unbefugte Benützer mit den Signalen brauchbare Bilder erzeugen können. Die befugten Benützer erhalten ein Decodiergerät, mit welchem die codierten Videosignale decodiert werden können, bevor sie in einem Fernsehempfänger weiterverarbeitet werden.

In einem bekannten Verfahren wird ein Videosignal mit mehreren, verschiedenen Verschlüsselungen codiert. Zunächst werden von den Schwarzschultern, die im Standard-Videosignal vor und nach jedem Zeilenimpuls vorhanden sind, zumindest die Schwarzschultern vor den Zeilenimpulsen durch Weiss-Schultern ersetzt, was in der Regel zur Folge hat, dass in einem üblichen Fernsehempfänger ohne Decodiergerät das Bild schwarz bleibt. Ausserdem wird der Bildinhalt anhand von wechselnden Daten verschlüsselt, die dann in dem Videosignal mit übertragen werden und vom passenden Decodiergerät für die Decodierung verwendet werden. Ein Fernsehsignal, in welchem das Videosignal nach diesem Verfahren codiert ist, kann auch von Satelliten ausgestrahlt werden, wobei üblicherweise Frequenzmodulation mit einem grossen Frequenzhub (z.B. etwa 20 MHz) angewandt wird, um eine Verbesserung des Rauschabstandes im demodulierten Signal zu ermöglichen. Beim Empfang eines solchen Fernsehsignals wird nun festgestellt, dass das Decodiergerät in sehr störender Weise gelegentlich während mehrerer Sekunden aussetzt, wenn der Rauschabstand relativ gering ist. Ein geringer Rauschabstand ergibt sich insbesondere dann, wenn für den Individualempfang des Fernsehsignals eine relativ kleine Antenne verwendet wird.

Die Aufgabe der Erfindung besteht darin, ein Gerät zur Verfügung zu stellen, mit welchem ein codiertes Videosignal, das einem Decodiergerät zugeführt werden soll, so verbessert werden kann, dass keine oder weniger Störungen des Betriebes des Decodiergerätes auftreten.

Das erfindungsgemässe Gerät, mit welchem die Aufgabe gelöst wird, ist im Patentanspruch 1 definiert.

Die Erfindung beruht auf den folgenden Tatsachen und Erkenntnissen : Bei der Demodulation von mit grossem Hub frequenzmodulierten Fernsehsignalen beobachtet man bei geringem Hochfrequenz-Rauschabstand im demodulierten Signal charakteristische Störungen, nämlich kurzzeitige Signaleinbrüche ("Fischchen"). Die Häufigkeit der Störung hängt neben dem Rauschabstand von der Art des verwendeten Demodulators (z.B. Phase Locked Loop) und der Bandbreite des Empfangsfilters ab. Solche Signaleinbrüche können im Videosignal einzelne Zeilenimpulse treffen und diese verkürzen oder unterbrechen (und so verdoppeln). Im eingangs beschriebenen Codierverfahren ist es nun aber für die Decodierung wichtig, dass die Breite der ausgesendeten Zeilenimpulse nicht verändert wird. Daher kann das Decodiergerät aussetzen, wenn es die Breite (zeitliche Dauer) der Zeilenimpulse nicht einwandfrei feststellen kann.

Es ist festgestellt worden, dass die genannten Signaleinbrüche vermehrt bei grossen Momentanwerten des Videosignals (d.h. bei hohem momentanem Hub des mit dem Videosignal modulierten Trägers) auftreten, während praktisch keine Signaleinbrüche stattfinden, wenn der Momentwert des Videosignals klein ist, d.h. in der Nähe der Mitte zwischen dem Weisswert und der Zeilenimpuls-Spitze liegt (bzw. wenn die momentane Frequenz des Trägers in der Nähe der Ruhefrequenz oder Mittelfrequenz liegt). Das erfindungsgemässe Gerät macht sich diese Tatsache zu Nutze : Der Schalterbetätiger legt jeweils in dem Zeitpunkt, in welchem das Signal am Videoeingang durch einen Schwellenwert S in einem mittleren Bereich zwischen dem Impulsbodenwert B (Zeilenimpuls–Spitze) und dem Weisswert W des Videosignals gegen den Impulsbodenwert B geht, den Videoausgang auf das Impulsbodenniveau B. Damit ist jeweils von diesem Zeitpunkt an die vordere Flanke jedes Zeilenimpulses am Videoausgang regeneriert, unabhängig von allfälligen Einbrüchen im Videosignal am Videoeingang.

Der Schalterbetätiger wird von der Aktivierungsschaltung nur während der Impulszeiten aktiviert, damit der Schalterbetätiger nicht auch von den Bildinhalt darstellenden teilen des Videosignals ausgelöst wird.

Bei einem codierten Videosignal, in welchem jedem Zeilenimpuls auch je eine Weiss-Schulter nachfolgt, kann die hintere Flanke jedes Zeilenimpulses in der gleichen Weise regeneriert werden, wenn der Schalterbetätiger dazu eingerichtet ist, den Videoausgang jeweils in dem Zeitpunkt, in welchem das Signal am Videoeingang durch den Schwellenwert S wieder gegen den Weisswert W geht, wieder mit dem Videoeingang zu verbinden.

Anderseits kann bei einem codierten Videosignal eine neue hintere Flanke jedes Zeilenimpulses in das Signal am Videoausgang auch ohne Beobachtung der hinteren Flanke des Zeilenimpulses a Videoeingang eingesetzt werden. Zu diesem Zweck kann der Schalterbetätiger einen Zeitgeber starten, der nach einer Zeitspanne entsprechend der Länge eines Zeilenimpulses den Videoausgang wieder mit der Videosignalleitung verbindet.

Ein Ausführungsbeispiel des erfindungsgemässen Gerätes wird nachstehend anhand der Zeichnung näher erläutert. In dieser zeigen :

Fig. 1 in einer grafischen Darstellung einen Ausschnitt aus einem codierten Videosignal und

Fig. 2 ein Schema eines Gerätes zum Verbessern eines codierten Videosignals.

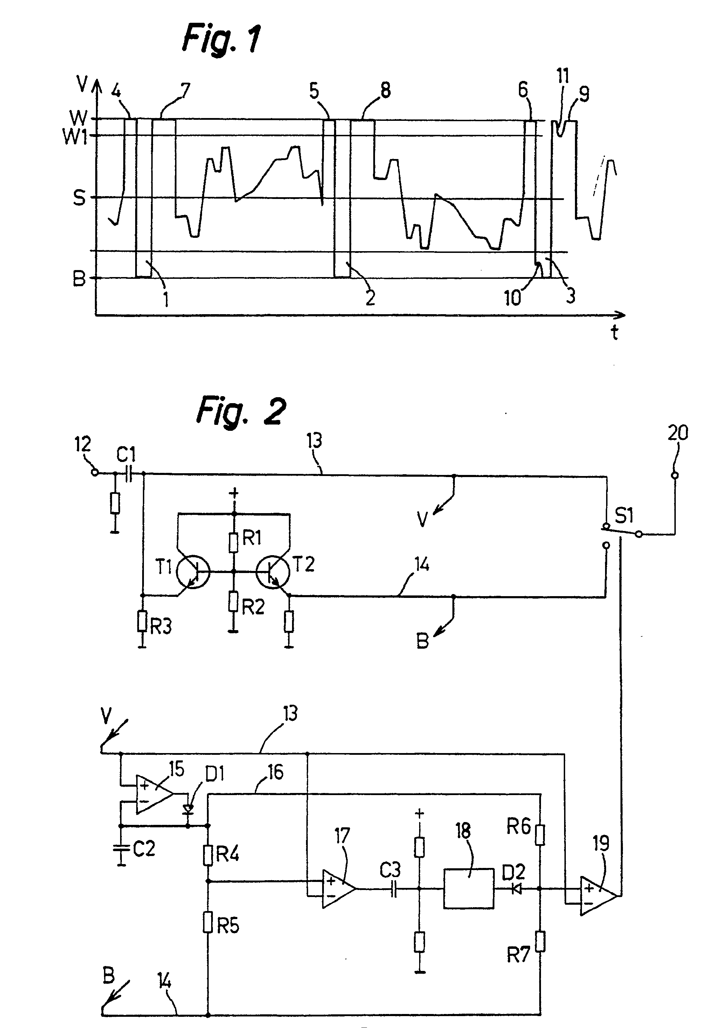

In Fig. 1 ist die Signalspannung V eines codierten Videosignals in Funktion der Zeit t schematisch dargestellt. Man erkennt drei aufeinanderfolgende Zeilenimpulse 1, 2 und 3, denen je eine Weiss-Schulter 4 bzw. 5 bzw. 6 vorangeht und je eine zweite Weiss-Schulter 7 bzw. 8 bzw. 9 nachfolgt. Während der Dauer der Zeilenimpulse 1, 2, 3 hat die Signalspannung V des Videosignals einen Wert B, der im Nachstehenden als Impulsbodenwert bezeichnet ist. Während der Dauer der Weiss-Schultern 4-9 hat die Signalspannung V einen Wert W, der im Nachstehenden als Weisswert bezeichnet ist.

Aus den eingangs erläuterten Gründen können im Videosignal kurzzeitige Signaleinbrüche auftreten, insbesondere bei grossen Momentanwerten des Videosignals, das heisst, wenn der Momentanwert des Videosignals in der Nähe des Weisswertes W oder in der Nähe des Impulsbodenwertes B liegt. In Fig. 1 ist ein solcher Signaleinbruch 10 im Zeilenimpuls 3 dargestellt, und ein Signaleinbruch 11 ist in der Weiss-Schulter 9 dargestellt. Der Zeilenimpuls 3 mit dem Signaleinbruch 10 kann im Decodiergerät fälschlich wie ein verkürzter Zeilenimpuls wirken und dadurch die Decodierung stören.

Das in Fig. 2 schematisch dargestellte Gerät dient dazu, im codierten Videosignal die Zeilenimpulse zu regenerieren. Das Videosignal wird einem Videoeingang 12 und von da über einen Kondensator C1 einer Leitung 13 zugeführt. Auf der Leitung 13 wird der Impulsboden des Videosignals mittels eines Transistors T1 auf einen vorbestimmten Wert geklemmt, der durch einen Spannungsteiler R1, R2 festgelegt ist. Ein zweiter transistor T2 gibt den vorbestimmten Impulsbodenwert B auf eine Leitung 14.

Ein Operationsverstärker 15, dem das geklemmte Videosignal V von der Leitung 13 zugeführt ist, dient als Weiss-Spitzendetektor. Am Minus-Eingang des Operationsverstärkers 15 liegt ein Kondensator C2, der vom Ausgangssignal des Operationsverstärkers über eine Diode D1 bis auf den Weisswert W aufgeladen wird, der dann auf einer Leitung 16 zur Verfügung steht.

Ein an die Leitungen 16 und 14 angeschlossener Spannungsteiler R4, R5 liefert eine in der Nähe des Weisswertes W liegende Spannung (In Fig. 1 mit W1 bezeichnet), mit der in einem Komparator 17 das Videosignal V von der Leitung 13 verglichen wird. Die Spannun W1 liegt vorzugsweise im Bereich zwischen

$$W1 = \frac{1}{4} B + \frac{3}{4} W \text{ und } W1 = \frac{1}{10} B + \frac{9}{10} W.$$ Der Komparator 17 liefert ein Ausgangssignal jeweils beim Auftreten der Weiss-Schultern im Videosignal V. Mit den vorderen Flanken der beim Auftreten der vorderen Weiss-Schultern 4, 5, 6 (Fig. 1) erzeugten Ausgangssignale wird jeweils über einen Kondensator C3 ein Zeitgeber 18 gestartet, der dann während einer Zeitspanne von etwa 10 μs ein positives Aktivierungssignal abgibt.

Dieses Aktivierungssignal gibt über eine Diode D2 den Mittelabgriff eines Spannungsteilers R6, R7 frei, der an den Leitungen 16 und 14 liegt. An dem Mittelabgriff liegt dann eine Spannung in einem mittleren Bereich zwischen dem Impulsbodenwert B von der Leitung 14 und dem Weisswert W von der Leitung 16. Diese Spannung, die vorzugsweise annähernd in der Mitte zwischen B und W liegt, d.h. etwa $\frac{1}{2} B + \frac{1}{2} W$ beträgt, wird als Schwellenwert S (Fig. 1) dem Plus-Eingang eines zweiten Komparators 19 zugeführt. Dem Minus-Eingang des Komparators 19 ist das Videosignal V von der Leitung 13 zugeführt. Der Komparator 19 gibt — innerhalb der Dauer des genannten Aktivierungssignals — ein Schalterbetätigungssignal ab, solange das Videosignal V unter dem Schwellenwert S liegt, das heisst jeweils während der Dauer der Zeilenimpulse 1, 2, 3 (Fig. 1), gemessen auf der Höhe des Schwellenwertes S, wo im Videosignal praktisch keine Signaleinbrüche vorkommen.

Ausserhalb der Zeiten des Aktivierungssignals vom Zeitgeber 18 kann der Komparator 19 nicht ansprechen, weil der Zeitgeber 18 über die Diode D2 den Mittelabgriff des Spannungsteilers R6, R7 bzw. den Plus-Eingang des Komparators 19 auf einer Spannung hält, die unter dem Impulsbodenwert B (allgemeiner: auf der vom Weisswert W abgewandten Seite des Inpulsbodenwertes) liegt. (Das heisst, die genannte Spannung beträgt a.B + (1 - a).W, wobei a > 1 ist.)

Das vom Komparator 19 abgegebene Schalterbetätigungssignal legt einen schnellen Analogschalter S1 zwischen den Leitungen 13 und 14 und einem Videoausgang 20 des Gerätes von der Leitung 13 auf die Leitung 14 um. So wird dem Videoausgang 20 während der Dauer der Zeilenimpulse — gemessen auf der Höhe des Schwellenwertes S — nicht das Videosignal von der Leitung 13, sondern der Impulsbodenwert B von der Leitung 14 zugeführt.

Im vorstehend anhand der Zeichnung beschriebenen Ausführungsbeispiel betätigt der aus dem Spannungsteiler R6, R7 und dem Komparator 19 bestehende Schalterbetätiger die aus dem Schalter S1 bestehende Umschalteinrichtung jeweils in dem Zeitpunkt, in welchem das Videosignal V auf der Leitung 13 durch den Schwellenwert S gegen den Impulsbodenwert B geht. Der Schalterbetätiger hebt die Betätigung der Umschalteinrichtung in dem Zeitpunkt wieder auf, in welchem das Videosignal V durch den Schwellenwert S wieder gegen den Weisswert W geht. Der Schalterbetätiger beobachtet also, auf der Höhe des Schwellenwertes S, sowohl die vordere Flanke als auch die hintere Flanke jedes Zeilenimpulses.

In einer Variante (nicht dargestellt) könnte der Schalterbetätiger auch dazu eingerichtet sein, nur die vordere Flanke jedes Zeilenimpulses zu beobachten und bei Auftreten derselben die Umschalteinrichtung zu betätigen. Gleichzeitig würde ein Zeitgeber gestartet, der die Betätigung der Umschalteinrichtung nach Ablauf einer vorgegebenen Zeitspanne entsprechend der Dauer eines Zeilenimpulses wieder aufhebt.

**Ansprüche**

1. Gerät zum Verbessern eines codierten Videosignals, welches Zeilenimpulse (1, 2, 3) enthält, denen je eine Weiss-Schulter (4, 5, 6) vorangeht, dadurch gekennzeichnet, dass das Gerät zur Regenerierung der Zeilenimpulse (1, 2, 3) folgendes enthält :

   eine Einrichtung (C1, R1, R2, R3, T1, T2) zum Abgeben eines Impulsbodenwertes B des einer Videosignalleitung (13) zugeführten Videosignals (V) auf eine Impulsbodenleitung (14),
   eine Umschalteinrichtung (S1), welche betätigbar ist zum Umschalten eines Videoausgangs (20) von der Videosignalleitung (13) auf die Impulsbodenleitung (14),
   einen Schalterbetätiger (R6, R7, 19) zum Betätigen der Umschalteinrichtung (S1) jeweils in dem Zeitpunkt, in welchem das Videosignal (V) auf der Videosignalleitung (13) durch einen Schwellenwert S in einem mittleren Bereich zwischen dem Impulsbodenwert B und dem Weisswert W des Videosignals (V) gegen den Impulsbodenwert B geht und
   eine Aktivierungsschaltung (R4, R5, 17, C3, 18, D2) zum Aktivieren des Schalterbetätigers (R6, R7, 19) jeweils beim Auftreten der jedem Zeilenimpuls (1, 2, 3) vorangehenden Weiss-Schulter (4, 5, 6) und Deaktivieren des Schalterbetätigers (R6, R7, 19) jeweils nach jedem Zeilenimpuls (1, 2, 3).

2. Gerät nach Anspruch 1, dadurch gekennzeichnet, dass der Schalterbetätiger (R6, R7, 19) dazu eingerichtet ist, die Betätigung der Umschalteinrichtung (S1) jeweils in dem Zeitpunkt aufzuheben, in welchem das Videosignal (V) auf der Videosignalleitung (13) durch den Schwellenwert S wieder gegen den Weisswert W geht.

3. Gerät nach Anspruch 1 oder 2, dadurch gekennzeichnet, dass der Schwellenwert S im Bereich zwischen $S = \frac{2}{3} B + \frac{1}{3} W$ und $S = \frac{1}{3} B + \frac{2}{3} W$ liegt

und vorzugsweise etwa $S = \frac{1}{2} B + \frac{1}{2} W$ beträgt.

4. Gerät nach einem der Ansprüche 1 bis 3, dadurch gekennzeichnet, dass es eine Schaltung (15, D1, C2) enthält zum Feststellen des Weisswertes W des Videosignals (V) und Abgeben eines kontinuierlichen Weisswertsignals.

5. Gerät nach einem der Ansprüche 1 bis 4, dadurch gekennzeichnet, dass die Einrichtung (C1, R1, R2, R3, T1, T2) zum Abgeben des Impulsbodenwertes B eine Klemmschaltung (C1, T1) enthält zum Klemmen der Impulsboden des Videosignals (V) auf einen vorbestimmten Wert.

6. Gerät nach einem der Ansprüche 1 bis 5, dadurch gekennzeichnet, dass der Schalterbetätiger (R6, R7, 19) einen Komparator (19) enthält, dem der Schwellenwert S und das Videosignal (V) zugeführt sind.

7. Gerät nach einem der Ansprüche 1 bis 6, dadurch gekennzeichnet, dass die Aktivierungsschaltung (R4, R5, 17, C3, 18, D2) einen Komparator (17) enthält, dem ein vorbestimmter Bruchteil W1 des Weisswertes W und das Videosignal (V) zugeführt sind, und einen Zeitgeber (18), der vom Ausgangssignal dieses Komparators (17) gestartet wird und dann den Schalterbetätiger (R6, R7, 19) für eine vorbestimmte Zeitspanne aktiviert.

8. Gerät nach Anspruch 7, dadurch gekennzeichnet, dass der vorbestimmte Bruchteil W1 einen Wert zwischen $\frac{1}{4} B + \frac{3}{4} W$ und $\frac{1}{10} B + \frac{9}{10} W$ hat.

9. Gerät nach den Ansprüchen 6 und 7, dadurch gekennzeichnet, dass der Zeitgeber (18) dazu eingerichtet ist, vor und nach der genannten Zeitspanne den Schwellenwerteingang des Schalterbetätigers (R6, R7, 19) mittels einer Diode (D2) auf einem Wert zu halten, der auf der vom Weisswert W abgewandten Seite des Impulsbodenwertes B liegt.

## Fig. 1

## Fig. 2